# EUROPEAN PATENT SPECIFICATION

(11) **EP 4 556 151 B1**
(45) Date of publication and mention of the grant of the patent: **09.12.2026**
(21) Application number: 23876453.4
(22) Date of filing: 13.09.2023
(51) Int. Cl.: B23K 20/12, B23K 37/003, B23K 20/26

(54) **METHOD FOR COOLING STIRRING FRICTION TOOL**
VERFAHREN ZUM KÜHLEN EINES REIBRÜHRWERKZEUGS
PROCÉDÉ DE REFROIDISSEMENT D'OUTIL DE FRICTION-MALAXAGE

(30) Priority: 12.10.2022 CN 202211247139
(43) Date of publication of application: 21.05.2025
(73) Proprietor: Institute for the Development and Quality, Macau, Macau 999078 (CN); Aerospace Engineering Equipment (Suzhou) Co., Ltd., Suzhou, Jiangsu 215100 (CN)
(72) Inventor: GUO, Dawei, Macau, Avenida Padre Tomás Pereira, SN, Taipa, Macau 999078 (CN); LI, Wenxiao, Suzhou, Jiangsu 215100 (CN); ZHU, Zhixiong, Suzhou, Jiangsu 215100 (CN); XU, Xiaoxia, Suzhou, Jiangsu 215100 (CN); WANG, Hu, Suzhou, Jiangsu 215100 (CN); YANG, Guoshun, Suzhou, Jiangsu 215100 (CN); KWOK, Chitat, Macau, Avenida Padre Tomás Pereira, SN, Taipa, Macau 999078 (CN); TAM, Lapmou, Macau, Avenida Padre Tomás Pereira, SN, Taipa, Macau 999078 (CN)
(74) Representative: Patent 42
(86) International application number: PCT/CN2023/118606
(87) International publication number: WO 2024/078248

(56) References cited:
- CN-A- 106 001 907
- CN-A- 106 825 905
- CN-A- 107 470 772
- CN-A- 107 470 772
- CN-A- 109 202 262
- CN-A- 109 202 262
- CN-U- 215 238 524
- CN-U- 219 336 363
- KR-A- 20120 055 035

## Description

### TECHNICAL FIELD

The present application relates to the technical field of friction stir welding, and in particular to a friction stir tool cooling method.

### BACKGROUND

The friction stir welding method, is characterized by small welding deformation and low residual stress, which enables it to eliminate defects such as pores, inclusions, and cracks. Additionally, it does not produce arc light, smoke, noise pollution, etc.. It can significantly reduce cost, save materials, optimize structure, and reduce the structural weight of aircraft, such characteristics have attracted the attention of scientific research institutions in various countries. The unique characteristics of this technology which are not present in other methods, led to its usage in the aerospace field. This method was chosen for the welding of longitudinal seams in the core stage storage tank section of the new generation launch vehicle.

During its application, the friction stir tool is installed on the main shaft of the friction stir device, it is driven to rotate and move by the friction stir device, the friction between the stirring head and the surface of the workpiece generates a large amount of heat to quickly soften the base material, thereby enabling processes like friction stir welding, friction surfacing or solid-state additive manufacturing. However, during the welding process, the increase in base metal temperature makes the workpiece deform, leading to grain growth and the worsening of the properties of the base metal. In addition, it increases the heat-affected zone of the welding zone and reduces the strength of the welding head and the welding quality. Therefore, it has become an important task that how to quickly reduce the temperature of welding tools.

In the related art, surface cooling methods are often used to cool friction stir tools. On the one hand, the temperature control of this cooling method requires surface cooling of the stirring pin or shaft shoulder of the friction stir tool at a far distance, and the heat is transferred to the position of the shaft shoulder and stirring pin, it does not directly cool the center of the friction stir tool close to the position of the shaft shoulder and the stirring pin, the cooling efficiency is low. On the other hand, when welding long-distance or large-thickness plates, the presence of heat accumulation and excessive friction stir temperature caused by unreasonable parameters will cause increased wear of friction stir tools, shortened service life, and reduced mechanical properties of the welding zone. In order to address these problems, the method of reducing the rotation speed and increasing the traverse speed was usually used to reduce the temperature of the friction stir tool. However, this method has a slow response, and it's not easy to obtain the appropriate welding parameters.

An application patent No. CN109202262A discloses a water-cooling structure of a stirring head for friction stir welding and a cooling method. The water-cooling structure comprises the stirring head, a water tank, a water pump, a water inlet pipe, a water return pipe, a stirring head clamping part, a water inlet channel, a signal transmission device, a temperature sensor, a water collection hood, a fixing frame, a welding device shell, an electronic temperature control device, a signal receiver and a cooler. According to the water cooling structure, cooling liquid in the water tank is pumped into the water inlet pipe through the water pump and then is delivered into a cooling cavity in the stirring head to absorb friction head, and then cooling water is automatically discharged by means of centrifugal force generated by rotation of the stirring head and is collected through the water collection hood to achieve circulation; and in addition, the temperature of the stirring head is measured in real time through the temperature sensor, and the water pump and the cooler are regulated and controlled in real time through the electronic temperature control device, so that it is ensured that the temperature of the stirring head is within a reasonable temperature range. The water-cooling structure of the stirring head is good in cooling effect and can achieve intelligent control.

### SUMMARY

In order to solve the above-mentioned technical problems, the present application provides a friction stir tool cooling method to improve the cooling efficiency of the friction stir tool.

The technical problems solved by the present application are achieved by adopting the following technical solutions:
a friction stir tool cooling method for cooling the stirring pin and/or shaft shoulder of the friction stir tool, including:
a coolant is introduced into the inlet of the cooling channel, the cooling channel is provided inside the friction stir tool, and
the inlet is provided on the side wall of the friction stir tool;
the coolant flows downward to the vicinity of the stirring pin and/or shaft shoulder; and
the coolant turns upward and flows out of the friction stir tool from an outlet, and the outlet is provided on the side wall of the friction stir tool.

In certain embodiment, the position of the inlet is higher than the position of the outlet.

In certain embodiment, the longitudinal section of the cooling channel is V-shaped.

In certain embodiment, the coolant flows downward to the vicinity of the stirring pin and/or shoulder, which specifically includes:
when the coolant flows downward to the vicinity of the stirring pin and/or the shoulder, it surrounds the stirring pin and/or the shoulder for at least one turn.

In certain embodiment, the friction stir tool cooling method further includes a supporting step:
the friction stir tool is supported radially and/or axially.
The friction stir tool cooling method further includes a sealing step:
the inlet is slidably sealed relative to the friction stir tool, and/or
the outlet is slidably sealed relative to the friction stir tool.

In some embodiment, the friction stir tool cooling method further includes a collection step:
the coolant flowing out of the outlet is collected below the outlet.

In certain embodiment, the friction stir tool cooling method further includes a flow-throwing step:
the coolant flowing out of the outlet is thrown away from the outer wall of the friction stir tool below the outlet.

In certain embodiment, the friction stir tool cooling method further includes:
the coolant lowing out of the outlet is sucked away, and/or
an inert gas is introduced to the lower end of the friction stir tool.

In certain embodiment, the friction stir tool cooling method further includes a temperature adjustment step:
temperature detection is conducted on the friction stir tool;
the flow rate of the coolant delivered to the friction stir tool is adjusted, according to the temperature of the friction stir tool;
if the temperature of the friction stir tool is greater than the pre-set value, the flow rate of the coolant is increased;

If the temperature of the friction stir tool is less than the pre-set value, the flow rate of the coolant is reduced.

The beneficial effects of the present application are:

The friction stir tool cooling method of the present application employs forced convection to cool the stirring pin and/or the shaft shoulder by introducing the coolant into the cooling channel inside the friction stir tool, which can effectively and promptly reduce the temperature of the stirring pin and/or the shaft shoulder. Especially when conducting the long-distance friction stir welding or large-thickness plate welding processes, the temperature of friction stir welding can be accurately and efficiently controlled by adjusting the flow rate of coolant, effectively extending the service life of the friction stir tool and improving the quality and mechanical properties of the weld. Moreover, the cold water can directly reach to the end of the friction stir tool, shortening the distance of heat conduction, thereby improving the cooling efficiency of the friction stir tool, and the coolant can stay briefly at the end of the friction stir tool, ensuring that the end of the friction stir tool is cooled.

### BRIEF DESCRIPTIONS OF THE DRAWINGS

In order to more clearly describe the technical solutions in the embodiments of the present application or in the related arts, the drawings required for descriptions of the embodiments or the prior arts will be briefly introduced below, obviously, the drawings described herein are merely some embodiments of the present application. Those skilled in the art can obtain other drawings based on these drawings without making creative work.
FIG. 1 is a flowchart of a friction stir tool cooling method according to the embodiments of the present application;
FIG. 2 is a schematic three-dimensional structural diagram of a friction stir tool according to the first embodiment of the present application;
FIG. 3 is a cross-sectional view of a friction stir tool according to the first embodiment of the present application;
FIG. 4 is a schematic three-dimensional structural diagram of a friction stir tool according to the second embodiment of the present application;
FIG. 5 is a cross-sectional view of a friction stir tool according to the second embodiment of the present application.

### Reference Numbers:

110. friction stir tool, 111. cooling channel, 112. outlet, 113. inlet, 114. shaft shoulder, 115. stirring pin;
120. flow conveying mechanism, 121. main body sleeve, 122. inlet channel, 123. outlet channel, 124. first support ring, 125. second support ring, 128. chassis, 129. flow-throwing ring, 1271. first sealing member, 1272. second sealing member; 1273. third sealing member;
130. support member;
140. suction pipe;
150. gas pipe.

### DETAILED DESCRIPTION

In order to enable those skilled in the art to better understand the technical solutions of the present application, the present application will be described in detail below in conjunction with the accompanying drawings, the description in this part is only exemplary and explanatory, which shall not limit the scope of the present application in any way.

It should be noted that similar reference numerals represent similar items in the following figures, therefore, once an item is defined in one figure, it does not need further definition and explanation in subsequent figures.

It should be noted that the orientation or positional relationship indicated by the terms "center", "upper", "lower", "left", "right", "vertical", "horizontal", "inner", "outer", etc., which is based on the orientation or positional relationship shown in the drawings, or the orientation or position relationship usually placed when the product of the invention is used, it is only for the convenience of describing the present application and simplifying the description, and does not indicate or imply that the device or component referred to must have a specific orientation, be constructed and operated in a specific orientation, therefore, it cannot be construed as a limitation of the present application. Further, the terms "first", "second", etc. are only used to differentiate descriptions, while cannot be understood as indicating or implying relative importance.

Furthermore, the terms "horizontal," "vertical," and "overhanging," etc. do not imply a requirement that the components are absolutely horizontal or overhanging, but rather may be slightly tilted. For example, "horizontal" only means that its direction is more horizontal than "vertical", it does not mean that the structure must be completely horizontal, but can be slightly tilted.

In the description of the present application, it should also be noted that, unless otherwise clearly stated and limited, the terms "set", "install", "connect" and "link" should be understood in a broad sense. For example, it can be a fixed connection, it can also be a detachable connection or an integral connection; it can be a mechanical connection or an electrical connection; it can be a direct connection or an indirect connection through an intermediate medium; it can be an internal connection between two components. For those skilled in the art, the specific meanings of the above terms in the present application can be understood on a case-by-case basis.

Friction stir welding uses the friction between the stirring head and the surface of the workpiece to generate a large amount of heat for quickly softening the base material, thereby achieving the work of friction stir welding, friction surfacing or solid-state additive manufacturing. However, during the welding process, the heat accumulation at the end of the friction stir tool and continuous increase in temperature, which can easily lead to a decrease in the mechanical properties of the friction stir tool tip and affect the welding effect. Taking friction stir welding of aluminum alloy as an example, during the working process, the surface temperature of the shaft shoulder 114 and stirring pin 115 of the friction stir tool 110 (tool steel, melting point is about 1400 degrees Celsius) can reach 550-600 degrees Celsius (the melting point of the aluminum alloy is about 660 degrees Celsius), the end of the friction stir tool 110 is continuously subjected to high degree of thermal evolution and wear behaviors. When welding the long-distance or large-thickness aluminum alloy plates, heat accumulates at the end of the friction stir tool 110 and the temperature continues to rise, resulting in a decrease in the mechanical properties of the end of the friction stir tool 110 and the inability to efficiently stir the aluminum plate at the welding zone. Meanwhile, it will lead to a reduction in the life of the friction stir tool 110 and a reduction in weld performance.

In view of this, the present application provides a friction stir tool cooling method, by introducing the coolant into the cooling channel inside the friction stir tool, forced convection cooling of the stirring pin and/or shaft shoulder can be achieved, which can effectively and promptly reduce the temperature of the stirring pin and/or the shaft shoulder. Especially when conducting long-distance friction stir welding or large thickness welding processes, precise and efficient control of the friction stir welding temperature can be achieved by adjusting the flow rate of the coolant, which effectively extends the service life of the friction stir tool and improves the weld quality and mechanical properties. Moreover, the cold water reaches directly to the end of the friction stir tool, which shortens the distance of heat conduction, thereby improving the cooling efficiency of the friction stir tool, and the coolant can stay briefly at the end of the friction stir tool, thereby ensuring that the end of the friction stir tool is cooled down.

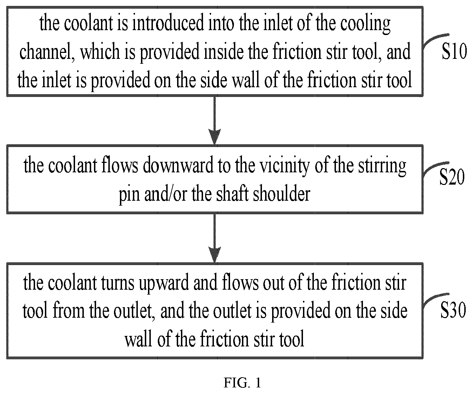

Referring to figure.1, the friction stir tool cooling method includes the following steps:
step S10: the coolant is introduced into the inlet 113 of the cooling channel 111, the cooling channel 111 is provided inside the friction stir tool 110, and the inlet 113 is provided on the side wall of the friction stir tool 110;
step S20: the coolant flows downward to the vicinity of the stirring pin 115 and/or the shaft shoulder 114;
step S30: the coolant turns upward and flows out of the friction stir tool 110 from the outlet 112, the outlet 112 is provided on the side wall of the friction stir tool 110.

The inlet 113 in step S10 can be connected to one end of the water pump through the inlet pipe, and the other end of the water pump is connected to the water tank. The inlet 113 can be an arc-shaped opening or a trumpet-shaped opening opened on the side wall of the friction stir tool 110, and the direction of the arc-shaped opening or the trumpet-shaped opening is consistent with the rotation direction of the friction stir tool 110, thereby reducing resistance, increasing the amount of coolant entering and accelerating the movement of the fluid in the cooling channel 111.

The outlet 112 and the inlet 113 in step S30 may be located on the same side of the friction stir tool 110, or may be located on two opposite sides of the friction stir tool 110, and the inlet 113 is located higher than the outlet 112 position to facilitate the flow of coolant, thereby reducing the flow resistance of the coolant and helping to improve the flow rate and cooling efficiency of the coolant.

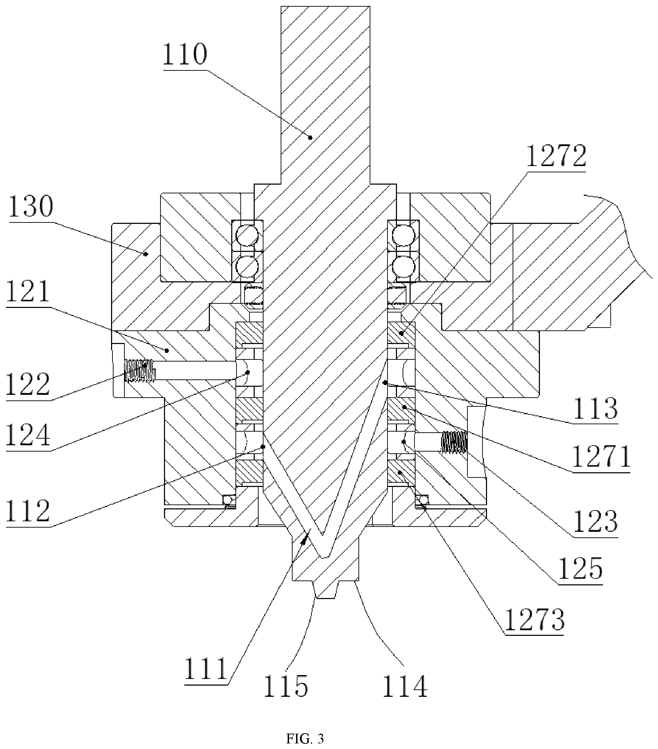

Referring to figure 3, the cooling channel 111 can be a flow channel with a V-shaped longitudinal section, and two intersecting deep holes are machined on the friction stir tool 110 by machining (the machining can be drilling or EDM processing), the two deep holes extend downward inside the friction stir tool 110 and intersect near the stirring pin 115 and/or the shaft shoulder 114 of the friction stir tool 110 to form a cooling channel 111 with a V-shaped longitudinal section.

In certain embodiments of the present application, the coolant flowing downward to the vicinity of the stirring pin 115 and/or the shaft shoulder 114 in step S20 includes: the coolant flowing downward to the vicinity of the stirring pin 115 and/or the shaft shoulder 114 surrounds the stirring pin 115 and /or shoulder 114 for at least one turn.

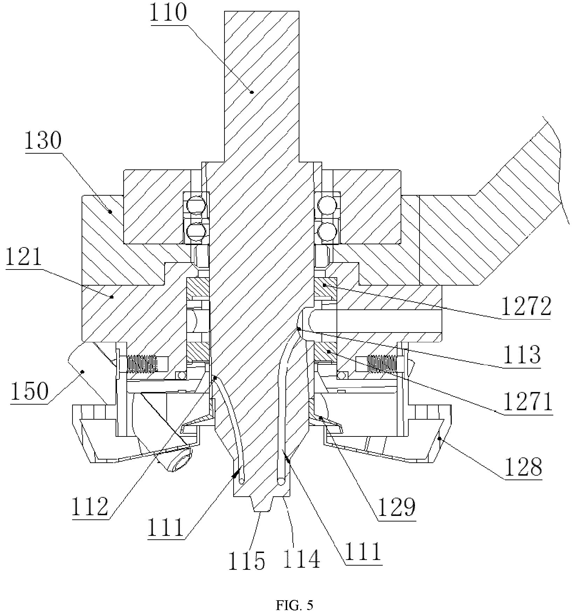

Referring to figure 5, the cooling channel 111 adopts a complex special-shaped flow channel, the special-shaped flow channel extends downward from the inlet 113, and surrounds the stirring pin 115 and/or the shaft shoulder 114 for at least one turn when it is close to the stirring pin 115 and/or the shoulder 114 to form an annular flow channel, and then turns upward and extends for connecting to the outlet 112, so that when the coolant flows downward to the vicinity of the stirring pin 115 and/or the shaft shoulder 114, after surrounding the stirring pin 115 and/or the shaft shoulder 114 for at least one turn, it flows upward from the outlet 112. It should be noted that since the special-shaped flow channel is inconvenient for machining, the friction stir tool 110 can be manufactured using a solid-state additive manufacturing method.

In certain embodiments of the present application, a supporting step is further included: the friction stir tool 110 is supported radially and/or axially.

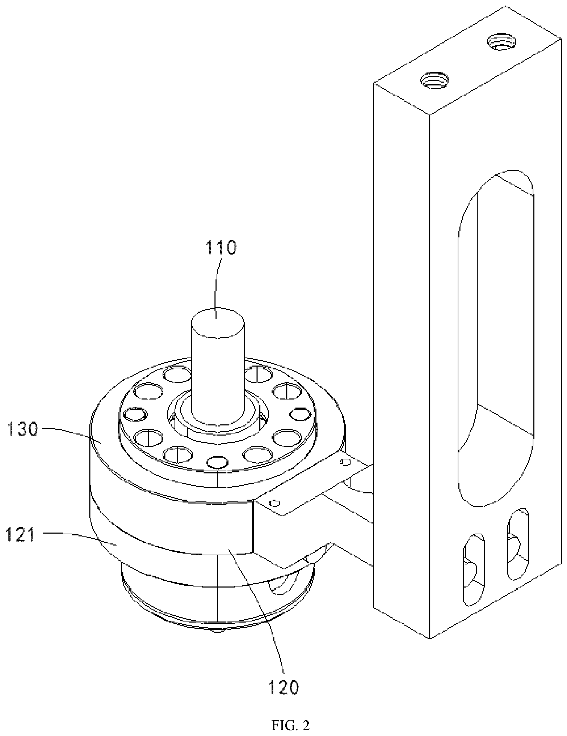

Specifically, referring to figure 2 to figure 5, a flow conveying mechanism 120 is provided on the outside of the friction stir tool 110. The flow conveying mechanism 120 includes a support member 130. The support member 130 includes a mounting bracket for providing on the friction stir device and a main body sleeve 121 provided on the mounting bracket. The friction stir tool 110 passes through the mounting bracket and the main body sleeve 121 in sequence, and the friction stir tool 110 is rotationally connected to the mounting bracket through the bearing, the relative axial distance between the friction stir tool 110 and the mounting bracket is limited by the axial limiting mechanism, thereby achieving radial and axial support of the friction stir tool 110. The axial limiting mechanism can adopt existing technology, such as a locking buckle, which will not be described in detail again herein.

The main body sleeve 121 is provided with an inlet channel 122 for delivering the coolant to the inlet 113 and an outlet channel 123 for receiving the coolant flowing out of the outlet 112. The inlet channel 122 can be connected to the water pump through the inlet pipe, so that the speed and opening of the water pump can be remotely controlled from a distance, thereby enabling remote temperature control. The coolant is transported from the inlet 113 to the cooling channel 111 through the inlet channel 122 to cool the stirring pin 115, and then discharged from the outlet 112 through the outlet channel 123. By cooling the tool shoulder 114 and the stirring pin 115 of the friction stir tool 110, its mechanical properties are increased and its service life is extended.

In this embodiment, the coolant is water flow, and the temperature of the water flow does not exceed the ambient temperature, so as to form a large temperature difference with the friction stir tool 110 in friction stir operation, thereby improving the cooling efficiency of the friction stir tool 110.

Further, the friction stir tool cooling method also includes a sealing step: the inlet 113 is slidably sealed relative to the friction stir tool 110, and/or the outlet 112 is slidably sealed relative to the friction stir tool 110.

Referring to figure 3, a first support ring 124 is provided between the inlet channel 122 and the inlet 113, the inlet channel 122 is connected with the inlet 113 through the first support ring 124, a second support ring 125 is positioned between the outlet channel 123 and the outlet 112, and the outlet channel 123 is connected with the outlet 112 through the second support ring 125. And the first support ring 124 and the second support ring 125 are fixed relative to the main body sleeve 121, but rotate relative to the friction stir tool 110. A first sealing member 1271 is provided between the first support ring 124 and the second support ring 125, and a second sealing member 1272 is provided on the upper part of the first support ring 124. And an upper sealing cavity is formed between the second sealing member 1272 and the first sealing member 1271. A third sealing member 1273 is provided at the lower part of the second support ring 125, and a lower sealing cavity is formed between the third sealing member 1273 and the first sealing member 1271.

As the position of the inlet 113 is higher than the position of the outlet 112, the upper sealing cavity can be provided as the water inlet cavity, and the lower sealing cavity can be provided as the water outlet cavity. When the coolant enters from the inlet channel 122, it is restricted between the first sealing member 1271 and the second sealing member 1272, and it can only enter the cooling channel 111. Meanwhile, the coolant in the lower seal cavity is restricted between the first sealing member 1271 and the third sealing member 1273, it can only enter the outlet channel 123. Generally, the temperature in the lower sealing cavity is higher, because the coolant has passed through the stirring pin 115 and/or the shaft shoulder 114 and absorbed heat, therefore, the liquid with a higher temperature is prevented from leaking into the upper sealing cavity, which improves the cooling efficiency.

In certain embodiments of the present application, a collection step is also included: the coolant flowing out from the outlet 112 is collected below the outlet 112.

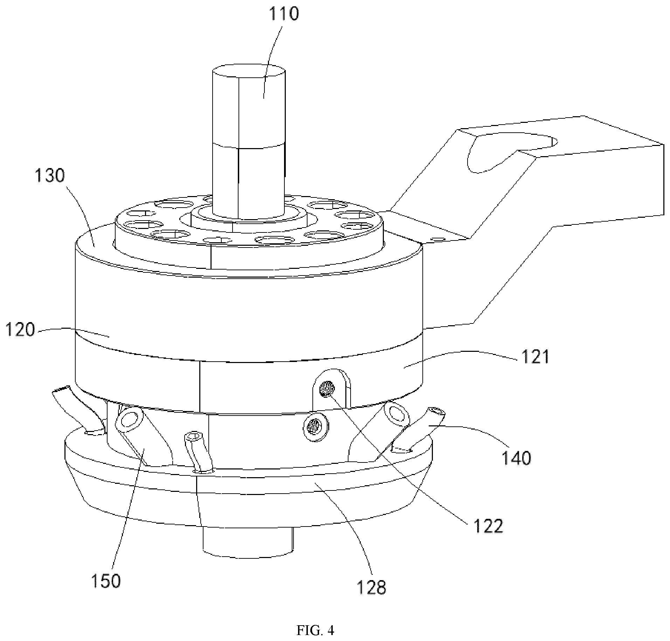

Referring to figure 4 and figure 5, a chassis 128 is provided at the lower part of the flow conveying mechanism 120, the friction stir tool 110 passes through the chassis 128, and the chassis 128 is provided with a receiving cavity for collecting the coolant flowing out from the outlet 112.

The coolant is transported into the cooling channel 111 through the inlet 113 to cool the stirring pin 115 and/or the shaft shoulder 114. The cooled coolant flows out from the outlet 112 to the receiving cavity of the chassis 128 for storage, which reduces the temperature at the shaft shoulder 114 and the stirring pin 115 of the friction stir tool 110.

Furthermore, a flow-throwing step is also included: the coolant flowing out from the outlet 112 is thrown away from the outer wall of the friction stir tool 110 below the outlet 112.

Referring to figure 5, the outer wall of the friction stir tool 110 located below the outlet 112 is provided with a flow-throwing ring 129. The flow-throwing ring 129 is used to guide the coolant flowing out from the outlet 112 into the receiving cavity on the chassis 128, preventing the coolant flowing out from the outlet 112 from flowing along the outer wall of the friction stir tool 110 to the welding part and affecting the welding quality.

In this embodiment, the flow-throwing ring 129 is tilted downward from the inside to the outside, so that the coolant flowing out from the outlet 112 can flow along the flow-throwing ring 129 to the receiving cavity due to gravity.

In certain embodiments of the present application, the friction stir tool cooling method further includes: the coolant flowing out from the outlet 112 is sucked away, and/or an inert gas is introduced to the lower end of the friction stir tool 110.

Specifically, the coolant flowing out from the outlet 112 can be sucked away by providing a water suction pipe 140 connected to the receiving cavity on the chassis 128. The water suction pipe 140 is used to suck the coolant in the receiving cavity. When in use, the water suction pipe 140 is connected to a pumping device such as a water pump to pump out the coolant in the receiving cavity.

To transport the inert gas to the lower end of the friction stir tool 110, a gas pipe 150 facing the end of the friction stir tool 110 can be provided on the chassis 128, the friction stir tool 110 and the welded specimens are protected by introducing an inert gas into the end of the friction stir tool 110 through the gas pipe 150. Argon gas can be used as the inert gas.

Furthermore, temperature adjustment steps are also included:

temperature detection is performed on the friction stir tool 110;

according to the temperature of the friction stir tool 110, the flow rate of the coolant delivered to the friction stir tool 110 is adjusted;

if the temperature of the friction stir tool 110 is greater than the pre-set value, the flow rate of the coolant is increased;

if the temperature of the friction stir tool 110 is lower than the pre-set value, the flow rate of the coolant is reduced.

The temperature of the friction stir tool 110 can be detected by using an infrared temperature measurement device, the infrared temperature measurement device is connected to an external controller to send the detected temperature value to the controller in time, and the controller controls the opening of the water pump through the controller, which allows the flow rate of the coolant to be adjusted.

It should be noted that, as used herein, the terms "include", "comprises" or any other variation thereof are intended to cover a non-exclusive inclusion, such that a process, method, article or equipment including a series of elements not only includes those elements, they also include other elements not expressly listed or inherent in the process, method, article or equipment.

This application uses specific examples to illustrate the principles and implementation methods of the present invention, the description of the above-mentioned examples is only used to help understand the method and the core idea of the present application, the above are only preferred embodiments of the present invention. It should be pointed out that due to the limitations of written expressions, there are objectively unlimited specific structures, for those skilled in the art, without departing from the principles of the present invention, some improvements, modifications or changes can also be made, or the above technical features can be combined in an appropriate manner; these improvements, modifications or combinations, or the concepts and technical solutions of the invention are directly applied to other situations without improvement, all should be regarded as the protection scope of the present invention as defined by the appended claims.

## Claims

1. A friction stir tool cooling method, used to cool the stirring pin (115) and/or the shaft shoulder (114) of the friction stir tool (110), comprising:
the coolant being introduced into the inlet (113) of the cooling channel (111), which is provided inside the friction stir tool (110),
the coolant flowing downward to the vicinity of the stirring pin (115) and/or the shaft shoulder (114); and the coolant turning upward and flowing out of the friction stir tool (110) from the outlet (112), and the outlet (112) being provided on the side wall of the friction stir tool (110),
**characterized in that**,
the inlet (113) is provided on the side wall of the friction stir tool (110).

2. The friction stir tool cooling method of claim 1, wherein the position of the inlet (113) is higher than the position of the outlet (112).

3. The friction stir tool cooling method of claim 1, wherein the longitudinal section of the cooling channel (111) is V-shaped.

4. The friction stir tool cooling method of claim 1, wherein the coolant flows downward to the vicinity of the stirring pin (115) and/or the shaft shoulder (114) specifically comprises:
when the coolant flows downward to the vicinity of the stirring pin (115) and/or the shaft shoulder (114), it surrounds the stirring pin (115) and/or the shaft shoulder (114) for at least one turn.

5. The friction stir tool cooling method of any one of claims 1, further comprising:
the friction stir tool (110) is supported radially and/or axially.

6. The friction stir tool cooling method of claim 5, further comprising sealing steps: the inlet (113) is sliding sealed relative to the friction stir tool (110), and/or the outlet (112) is sliding sealed relative to the friction stir tool (110).

7. The friction stir tool cooling method of any one of claims 1-4, further comprising:
the coolant flowing out of the outlet (112) is collected from below the outlet (112).

8. The friction stir tool cooling method of any one of claims 1-4, further comprising:
the coolant flowing out of the outlet (112) is thrown away from the outer wall of the friction stir tool (110) below the outlet (112).

9. The friction stir tool cooling method of claim 8, further comprising:
the coolant flowing out of the outlet (112) is sucked up, and/or inert gas is delivered to the lower end of the friction stir tool (110).

10. The friction stir tool cooling method of any one of claims 1-4, further comprising:
temperature detection is performed on the friction stir tool (110);
the flow rate of the coolant delivered to the friction stir tool (110) is adjusted according to the temperature of the friction stir tool (110);
if the temperature of the friction stir tool (110) is greater than the pre-set value, the flow rate of the coolant is increased; and
if the temperature of the friction stir tool (110) is less than the pre-set value, the flow rate of the coolant is reduced.

## Patentansprüche

1. Verfahren zum Kühlen eines Rührstifts (115) und/oder einer Werkzeugschulter (114) eines Rührreibwerkzeugs (110), umfassend:
Einleiten eines Kühlmittels in einen Einlass (113) eines Kühlkanals (111), der im Inneren des Rührreibwerkzeugs (110) vorgesehen ist;
Abwärtsströmen des Kühlmittels bis in die Nähe des Rührstifts (115) und/oder der Werkzeugschulter (114); und Umlenken des Kühlmittels nach oben und Ausströmen des Kühlmittels aus dem Rührreibwerkzeug (110) durch einen Auslass (112), wobei der Auslass (112) an der Seitenwand des Rührreibwerkzeugs (110) vorgesehen ist,
**dadurch gekennzeichnet, dass**
der Einlass (113) an der Seitenwand des Rührreibwerkzeugs (110) vorgesehen ist.

2. Verfahren zum Kühlen eines Rührreibwerkzeugs nach Anspruch 1, wobei die Position des Einlasses (113) höher als die Position des Auslasses (112) liegt.

3. Verfahren zum Kühlen eines Rührreibwerkzeugs nach Anspruch 1, wobei der Längsschnitt des Kühlkanals (111) V-förmig ist.

4. Verfahren zum Kühlen eines Rührreibwerkzeugs nach Anspruch 1, wobei das Abwärtsströmen des Kühlmittels bis in die Nähe des Rührstifts (115) und/oder der Werkzeugschulter (114) im Einzelnen Folgendes umfasst:
Umströmen des Rührstifts (115) und/oder der Werkzeugschulter (114) durch das Kühlmittel über mindestens einen vollständigen Umlauf, wenn das Kühlmittel bis in die Nähe des Rührstifts (115) und/oder der Werkzeugschulter (114) abwärts strömt.

5. Verfahren zum Kühlen eines Rührreibwerkzeugs nach Anspruch 1, ferner umfassend:
radiales und/oder axiales Abstützen des Rührreibwerkzeugs (110).

6. Verfahren zum Kühlen eines Rührreibwerkzeugs nach Anspruch 5, ferner umfassend Abdichtungsschritte, bei denen der Einlass (113) gegenüber dem Rührreibwerkzeug (110) gleitend abgedichtet wird und/oder der Auslass (112) gegenüber dem Rührreibwerkzeug (110) gleitend abgedichtet wird.

7. Verfahren zum Kühlen eines Rührreibwerkzeugs nach einem der Ansprüche 1 bis 4, ferner umfassend:
Auffangen des aus dem Auslass (112) ausströmenden Kühlmittels unterhalb des Auslasses (112).

8. Verfahren zum Kühlen eines Rührreibwerkzeugs nach einem der Ansprüche 1 bis 4, ferner umfassend:
Abschleudern des aus dem Auslass (112) ausströmenden Kühlmittels unterhalb des Auslasses (112) von der Außenwand des Rührreibwerkzeugs (110).

9. Verfahren zum Kühlen eines Rührreibwerkzeugs nach Anspruch 8, ferner umfassend:
Absaugen des aus dem Auslass (112) ausströmenden Kühlmittels und/oder Zuführen eines Inertgases zum unteren Ende des Rührreibwerkzeugs (110).

10. Verfahren zum Kühlen eines Rührreibwerkzeugs nach einem der Ansprüche 1 bis 4, ferner umfassend:
Erfassen der Temperatur des Rührreibwerkzeugs (110);
Einstellen des Durchflusses des dem Rührreibwerkzeug (110) zugeführten Kühlmittels entsprechend der Temperatur des Rührreibwerkzeugs (110);
Erhöhen des Durchflusses des Kühlmittels, wenn die Temperatur des Rührreibwerkzeugs (110) größer als der voreingestellte Wert ist; und
Verringern des Durchflusses des Kühlmittels, wenn die Temperatur des Rührreibwerkzeugs (110) kleiner als der voreingestellte Wert ist.

## Revendications

1. Procédé de refroidissement d'un outil de friction-malaxage, utilisé pour refroidir le pion de malaxage (115) et/ou l'épaulement d'outil (114) de l'outil de friction-malaxage (110), comprenant :
introduire le fluide de refroidissement dans l'entrée (113) du canal de refroidissement (111), qui est ménagé à l'intérieur de l'outil de friction-malaxage (110) ;
faire s'écouler le fluide de refroidissement vers le bas jusqu'au voisinage du pion de malaxage (115) et/ou de l'épaulement d'outil (114) ; et faire remonter et s'écouler le fluide de refroidissement hors de l'outil de friction-malaxage (110) depuis la sortie (112), la sortie (112) étant ménagée sur la paroi latérale de l'outil de friction-malaxage (110),
**caractérisé en ce que**
l'entrée (113) est ménagée sur la paroi latérale de l'outil de friction-malaxage (110).

2. Procédé de refroidissement d'un outil de friction-malaxage selon la revendication 1, dans lequel la position de l'entrée (113) est plus haute que la position de la sortie (112).

3. Procédé de refroidissement d'un outil de friction-malaxage selon la revendication 1, dans lequel la section longitudinale du canal de refroidissement (111) est en forme de V.

4. Procédé de refroidissement d'un outil de friction-malaxage selon la revendication 1, dans lequel l'étape consistant à faire s'écouler le fluide de refroidissement vers le bas jusqu'au voisinage du pion de malaxage (115) et/ou de l'épaulement d'outil (114) comprend spécifiquement :
lorsque le fluide de refroidissement s'écoule vers le bas jusqu'au voisinage du pion de malaxage (115) et/ou de l'épaulement d'outil (114), entourer le pion de malaxage (115) et/ou l'épaulement d'outil (114) sur au moins un tour avec le fluide de refroidissement.

5. Procédé de refroidissement d'un outil de friction-malaxage selon la revendication 1, dans lequel :
l'outil de friction-malaxage (110) est supporté radialement et/ou axialement.

6. Procédé de refroidissement d'un outil de friction-malaxage selon la revendication 5, comprenant en outre des étapes d'étanchéité dans lesquelles : l'entrée (113) est scellée de manière étanche et coulissante par rapport à l'outil de friction-malaxage (110), et/ou la sortie (112) est scellée de manière étanche et coulissante par rapport à l'outil de friction-malaxage (110).

7. Procédé de refroidissement d'un outil de friction-malaxage selon l'une quelconque des revendications 1 à 4, dans lequel :
le fluide de refroidissement s'écoulant hors de la sortie (112) est collecté depuis le dessous de la sortie (112).

8. Procédé de refroidissement d'un outil de friction-malaxage selon l'une quelconque des revendications 1 à 4, dans lequel :
le fluide de refroidissement s'écoulant hors de la sortie (112) est projeté à l'écart de la paroi externe de l'outil de friction-malaxage (110) en dessous de la sortie (112).

9. Procédé de refroidissement d'un outil de friction-malaxage selon la revendication 8, dans lequel :
le fluide de refroidissement s'écoulant hors de la sortie (112) est aspiré, et/ou un gaz inerte est délivré à l'extrémité inférieure de l'outil de friction-malaxage (110).

10. Procédé de refroidissement d'un outil de friction-malaxage selon l'une quelconque des revendications 1 à 4, dans lequel :
une détection de température est effectuée sur l'outil de friction-malaxage (110) ;
le débit du fluide de refroidissement délivré à l'outil de friction-malaxage (110) est ajusté en fonction de la température de l'outil de friction-malaxage (110) ;
le débit du fluide de refroidissement est augmenté si la température de l'outil de friction-malaxage (110) est supérieure à la valeur prédéfinie ; et
le débit du fluide de refroidissement est réduit si la température de l'outil de friction-malaxage (110) est inférieure à la valeur prédéfinie.
